# EUROPÄISCHE PATENTANMELDUNG

(11) **EP 1 205 402 A2**
(43) Veröffentlichungstag der Anmeldung: **15.05.2002**
(21) Anmeldenummer: 01125633.6
(22) Anmeldetag: 26.10.2001
(51) Int. Cl.: B65D 83/06

(54) **Portionierungseinrichtung**

(30) Priorität: 14.11.2000 DE 20019296 U
(71) Anmelder: EM-DS Solutions Lizenzverwertung OHG, 88250 Weingarten (DE)
(72) Erfinder: Müller, Erich, 88250 Weingarten (DE); Schmid, Daniel, 72135 Dettenhausen (DE)
(74) Vertreter: Kern, Wolfgang, Dipl.-Ing.

(57) **Zusammenfassung**

Portionierungseinrichtung für pulverförmige Nahrungsmittel, insbesondere Baby-Zufütterugnsmittel, wie Milchpulver u.dgl., zum Einfüllen in mit einem Schraubverschluß versehene Trinkflaschen für Babies, so daß besondere Quantitäten bzw. Portionen der Baby-Nahrungsmittel eingehalten bzw. für den jeweiligen Fütterungszeitpunkt vorbereitet werden können, wodurch auch dann, wenn das Baby sich auf Reisen befindet, die richtigen Füllmengen eingehalten werden können.

Hierzu kennzeichnet sich die vorgeschlagene Portionierungseinrichtung durch einen deckelartigen Flansch (2) zum Aufstecken auf einen das Baby-Zufütterungsmittel enthaltenden Vorratsbehälter (3), mit einer durch einen Schieber (5) in der Flanschoberfläche (9) verschließbaren Öffnung, einem auf dem Flansch (2) oberhalb des Schiebers (5) befindlichen, mit dem Flansch (2) dicht verbundenen oder verbindbaren Dosierbehälter (4), dessen Füllvolumen (A + B) durch einen weiteren Schieber (6) unterteilbar ist und dessen oberes, dem Vorratsbehälter (3) abgewandtes Ende durch einen dritten Flansch (7) verschließbar ist, der die Zufuhr des Baby-Zufütterungsmittels zur Baby-Flasche bzw. zum Schraubverschluß (8) dieser Flasche steuert.

## Beschreibung

Die Erfindung betrifft eine Portionierungseinrichtung für pulverförmige Nahrungsmittel insbesondere Baby-Zufütterungsmittel, wie Milchpulver u.dgl., zum Einfüllen in mit einem Schraubverschluß versehenen Trinkflaschen für Babies.

Bei der Zubereitung der Baby-Nahrung, die in den speziellen Baby-Fläschchen verfüttert wird, sind aus ernährungstechnischen und Gesundheitsgründen besondere Quantitäten bzw. Portionen der Baby-Nahrungsmittel, beispielsweise Milchpulver, einzuhalten und für den jeweiligen Fütterungszeitpunkt vorzubereiten. Hierbei spielt also die richtige Füllmenge des Milch- bzw. Zufütterungszusatzes für die Baby-Fläschchen eine wesentliche Rolle. Sofern die Zubereitung zu Hause erfolgt, geschieht die Portionierung auf übliche Weise. Befindet sich das Baby jedoch auf Reisen und unterwegs, so steht in aller Regel die notwendige Portionierungshilfe nicht zur Verfügung, so daß man bezüglich der richtigen Füllmenge mehr oder weniger auf Schätzungen angewiesen ist.

Hier schafft die Erfindung eine Abhilfe, indem sie vorschlägt, eine Portionierungseinrichtung der eingangs genannten Art zu schaffen, die sich kennzeichnet durch einen deckelartigen Flansch zum Aufstecken auf einen das Baby-Zufütterungsmittel enthaltenden Vorratsbehälter, mit einer durch einen Schieber in der Flanschoberfläche verschließbaren Öffnung, einem auf dem Flansch oberhalb des Schiebers befindlichen, mit dem Flansch dicht verbundenen oder verbindbaren Dosierbehälter, dessen Füllvolumen durch einen weiteren Schieber unterteilbar ist und dessen oberes, dem Vorratsbehälter abgewandtes Ende durch einen dritten Flansch verschließbar ist, der die Zufuhr des Baby-Zufütterungsmittels zur Baby-Flasche bzw. zum Schraubverschluß dieser Flasche steuert.

Vorteilhafte Ausgestaltungen des Erfindungsvorschlags sind in den Unteransprüchen gekennzeichnet.

Wesentlicher Gedanke der Erfindung ist somit, daß ein Dosierbehälter geschaffen wird, der sich auf das Zufütterungsmittel beinhaltende Vorratsgefäß aufsetzen läßt und, unterteilt durch diverse Schieber, so beschaffen ist, daß er die für das Abfüllen des Zufütterungszusatzes, also beispielsweise des Milchpulvers, erforderliche Menge aufnehmen kann, um sie danach, wenn die Fütterungszeit gekommen ist, in das Baby-Fläschchen abzugeben.

Dieser Dosierbehälter läßt sich also unabhängig von dem Vorratsbehälter auf Reisen mitnehmen und mit wenigstens einer Zufütterungsration füllen, mit der dann die Baby-Flasche unterwegs gefüllt werden kann.

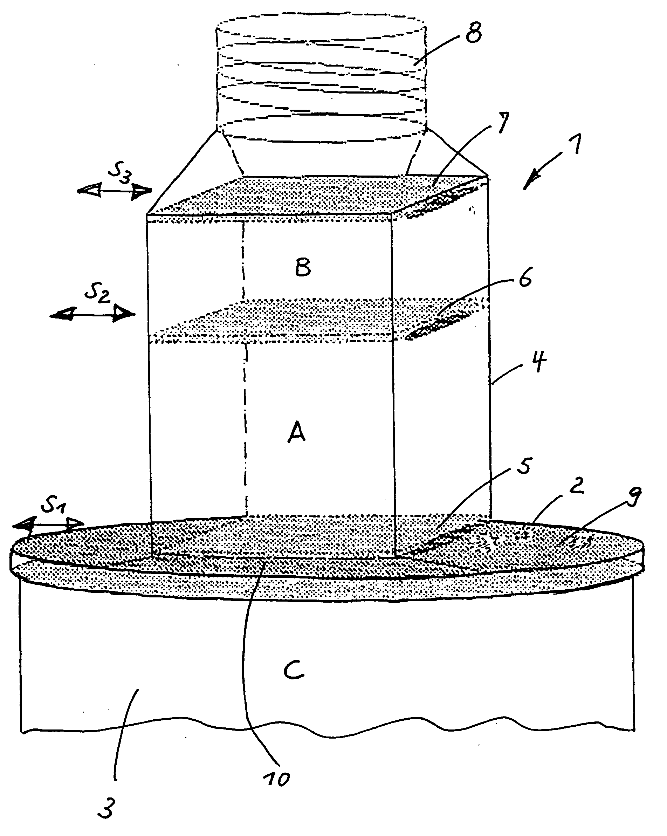

Die Erfindung wird nachfolgend anhand des in der Zeichnung dargestellten Ausführungsbeispiels, das in einer perspektivischen Draufsicht schematisch einen Dosierbehälter mit zugehörigem deckelartigen Flansch und angedeutetem Schraubverschluß für die Baby-Flasche zeigt, näher erläutert.

Der in der Zeichnung teilweise dargestellte Vorratsbehälter 3 dient zur Aufnahme eines pulverförmigen Nahrungs- bzw. Nahrungsergänzungsmittels als Zufütterungsmittel für Baby-Flaschen, beispielsweise eines Milchpulvers C. Seine Füllöffnung ist durch einen deckelartigen Flansch 2 verschlossen, der auf den Vorratsbehälter aufgesteckt wird, jedenfalls so befestigt wird, daß er sich nicht von selbst lösen kann.

Auf dem Flansch ist ein Dosierbehälter 4 runden oder eckigen Querschnitts angeordnet, der durch eine nicht näher dargestellte Öffnung 10 im deckelartigen Flansch 2, die von einem Schieber 5 verschlossen wird, mit dem Inhalt des Vorratsbehälters in Verbindung stehen kann.

Das Volumen des Dosierbehälters 4 ist durch einen in Richtung des Doppelpfeils S₂ verschiebbar gelagerten Schieber 6 in die beiden Räume A und B unterteilt. Der Boden des Volumens A wird, wie oben bereits erwähnt, durch den in Richtung des Doppelpfeils S₁ beweglichen Schieber 5 gebildet, der gleichzeitig die nicht gezeigte Öffnung in der Oberfläche 9 des deckelartigen Flansches 2 verschließt.

Das obere Ende des Dosierbehälters 4 ist durch einen in etwa parallel zu dem Schieber 6 angeordneten Schieber 7 verschlossen, der in Richtung des Doppelpfeils S₃ beweglich ist, um das obere Volumen B am Austreten in den Schraubverschluß 8 der Baby-Flasche zu hindern.

Das Ganze bildet also eine Dosiereinrichtung 1, die unabhängig von der Baby-Flasche aus dem Vorratsbehälter C eine gewünschte Menge an Zufütterungsnahrungsmittel aufnehmen kann, um sie entweder vollständig getrennt von dem deckelartigen Flansch 2 oder zusammen mit letzterem zu transportieren und beispielsweise unterwegs, wenn die Fütterungszeit gekommen ist, in die vorhandene Baby-Flasche abzufüllen. Man geht dabei so vor, daß bei auf dem Vorratsbehälter 3 aufgesetztem deckelartigen Flansch 2 zunächst der Schieber 5 geöffnet wird, dagegen der Schieber 6 geschlossen bleibt, um eine gewünschte Füllmenge in das Volumen A aufzunehmen. Danach wird der Schieber 5 geschlossen, wodurch auch die in der Oberfläche 2 des deckelartigen Flansches befindliche Öffnung 10 verschlossen wird. Danach wird der Schieber 6 zum Dosieren einer gewünschten Füllmenge geöffnet, wodurch sich das Volumen B ganz oder teilweise füllt, jedenfalls eine solche Füllmenge aufnimmt, wie sie später für die Baby-Flasche benötigt wird. Dabei bleibt zunächst der Schieber 7 am oberen Ende des Dosierbehälters 4 geschlossen. Nach dem Schließen des Schiebers 6 befindet sich also im Volumen B die gewünschte Menge an Zufütterungszusatz und kann dann beliebig später durch Öffnen des Schiebers 7 in die Baby-Flasche abgegeben werden, wobei letztere über den Schraubverschluß 8 mit dem Kopf der Baby-Flasche verbunden wird.

Als Beispiel kann angenommen werden, daß das Füllvolumen B 75 ml und das Füllvolumen A 125 ml betragen, um eine Vorstellung über die gesamte Größe des Dosierbehälters zu geben, der im übrigen eine Wandung besitzen kann, die den Behälterinhalt sichtbar macht, also beispielsweise aus Glas oder Plexiglas bestehen kann. Diese Wandung kann auch mit hier nicht dargestellten Markierungen zur Beurteilung des Füllungsgrades versehen sein.

Somit bietet die oben beschriebene Positionierungseinrichtung ein probates Mittel, um gewissermaßen unterwegs die richtige Füllmenge des Milch- bzw. Zufütterungszusatzes in das Baby-Fläschchen abzufüllen, nachdem der Dosierbehälter 4 zu Hause auf den Vorratsbehälter 3 aufgesteckt wurde und zusammen mit letzterem gewissermaßen auf den Kopf gestellt wurde, so daß ein gewünschtes Quantum an Zufütterungszusatz C durch den geöffneten Schieber 5 in den Volumenraum A gelangt ist. Sobald die gewünschte Füllmenge vorhanden war, wurde der Schieber geschlossen und die Portionierungseinrichtung wieder umgedreht, d.h. vom Kopf auf den Boden gestellt, wobei das restliche pulverförmige Zufütterungszusatzmaterial von selbst wieder in den Vorratsbehälter 3 zurückgekehrt ist.

Somit ist das Befüllen einer Baby-Flasche unterwegs kein Problem mehr und geschieht auch auf saubere Weise.

## Patentansprüche

1. Portionierungseinrichtung für pulverförmige Nahrungsmittel insbesondere Baby-Zufütterrungsmittel, wie Milchpulver u.dgl., zum Einfüllen in mit einem Schraubverschluß versehenen Trinkflaschen für Babies, **gekennzeichnet durch** einen deckelartigen Flansch (2) zum Aufstecken auf einen das Baby-Zufütterungsmittel enthaltenden Vorratsbehälter (3), mit einer **durch** einen Schieber (5) in der Flanschoberfläche (9) verschließbaren Öffnung, einem auf dem Flansch (2) oberhalb des Schiebers (5) befindlichen, mit dem Flansch (2) dicht verbundenen oder verbindbaren Dosierbehälter (4), dessen Füllvolumen (A + B) **durch** einen weiteren Schieber (6) unterteilbar ist und dessen oberes, dem Vorratsbehälter (3) abgewandtes Ende **durch** einen dritten Flansch (7) verschließbar ist, der die Zufuhr des Baby-Zufütterungsmittels zur Baby-Flasche bzw. zum Schraubverschluß (8) dieser Flasche steuert.

2. Portionierungseinrichtung nach Anspruch 1, **dadurch gekennzeichnet, daß** der Dosierbehälter (4) zusammen mit dem deckelartigen Flansch (2) als separate Einrichtung ausgebildet ist, die getrennt von sowohl der Baby-Flasche als auch von dem das Zufütterungsnahrungsmittel (C) aufnehmenden Vorratsbehälter (3) sowohl im leeren als auch im mit dem abgefüllten Baby-Zufütterungsnahrungsmittel gefüllten Zustand aufbewarbar und transportierbar ist.

3. Portionierungseinrichtung nach den Ansprüchen 1 und 2, **dadurch gekennzeichnet, daß** die Schieber (5, 6, 7) mit Sicherungen versehen sind, die ein versehentliches Öffnen oder Schließen verhindern.

4. Portionierungseinrichtung nach Anspruch 1, **dadurch gekennzeichnet, daß** der deckelartige Flansch (2) von dem Dosierbehälter (4) trennbar ist und seine Entnahmeöffnung (10), über der der Schieber (5) des Dosierbehälters (4) anordbar ist, mit einer selbständigen Verschlußvorrichtung versehen ist.

5. Portionierungseinrichtung nach einem der Ansprüche 1 - 4, **dadurch gekennzeichnet, daß** der deckelartige Flansch (2) auf dem Vorratsbehälter (3) einen festen Sitz hat.

6. Portionierungseinrichtung nach einem der Ansprüche 1 - 5, **dadurch gekennzeichnet, daß** der Boden des Dosierbehälters (4) dem bodenseitigen Schieber (5) des Behälters entspricht.

7. Portionierungseinrichtung nach einem der Ansprüche 1 - 5, **dadurch gekennzeichnet, daß** der bodenseitige Schieber (5) des Dosierbehälters (4) kleiner ist als der Boden dieses Behälters selbst und an ihm verschiebbar gelagert ist.

8. Portionierungseinrichtung nach einem der Ansprüche 1 - 7, **dadurch gekennzeichnet, daß** die Wandung des Dosierbehälters (4) aus einem den Behälterinhalt sichtbar werden lassenden Material besteht.

9. Portionierungseinrichtung nach einem der Ansprüche 1 - 8, **dadurch gekennzeichnet, daß** die Wandung des Dosierbehälters (4) mit Markierungen zur Beurteilung des Füllungsstandes versehen ist.

10. Portionierungseinrichtung nach einem der Ansprüche 1 - 8, **dadurch gekennzeichnet, daß** der Kopf des Dosierbehälters (4) mit einem Schraubverschluß (8) für eine Baby-Flasche versehen ist.
